# EUROPEAN PATENT APPLICATION

(11) **EP 4 810 588 A1**
(43) Date of publication of application: **23.09.2026**
(21) Application number: 23961257.5
(22) Date of filing: 21.12.2023
(51) Int. Cl.: C10G 1/10, C10G 1/00, B65G 33/26, F28D 11/02

(54) **ASH COOLING AND CONVEYING DEVICE, ASH DISCHARGING SYSTEM, AND ASH DISCHARGING METHOD**

(30) Priority: 15.12.2023 CN 202311733698
(71) Applicant: Zhejiang Comy Environment Technology Co., Ltd, Ningbo, Zhejiang 315048 (CN)
(72) Inventor: XIN, Benen, Ningbo, Zhejiang 315048 (CN); MENG, Jian, Ningbo, Zhejiang 315048 (CN); XUE, Tao, Ningbo, Zhejiang 315048 (CN); FAN, Yadong, Ningbo, Zhejiang 315048 (CN)
(74) Representative: Chung, Hoi Kan
(86) International application number: PCT/CN2023/140670
(87) International publication number: WO 2025/123401

(57) **Abstract**

An ash cooling and conveying device. The ash cooling and conveying device comprises a second ash inlet, a cooling screw conveyor, a U-shaped cooling tank, and a second ash discharging port; the second ash inlet and the second ash discharging port are separately connected to the U-shaped cooling tank; the cooling screw conveyor is arranged in the U-shaped cooling tank; and the cooling screw conveyor comprises a continuous blade screw conveyor section and a segmented blade screw conveyor section which are connected. The present application further relates to an ash discharging system and an ash discharging method. The ash discharging system comprises an ash drying device used for drying wet ash from an upstream reaction kettle to obtain dry ash, and the ash cooling and conveying device used for cooling the dry ash to obtain cooled dry ash. The ash discharging system can dry the wet ash more quickly, thereby shortening the time spent on waste plastic pyrolysis for oil production and improving the treatment capacity of waste plastic pyrolysis systems, and can quickly cool high-temperature dry ash and convey cooled ash to achieve continuous ash discharging.

## Description

### TECHNICAL FIELD

The present application relates to the technical field of waste plastic recycling, in particular to an ash cooling and conveying device, an ash discharging system and an ash discharging method.

### DESCRIPTION OF THE PRIOR ART

In the production process of catalytically cracking waste plastic to produce oil, when the reaction temperature of catalytic pyrolysis is controlled between 400 to 450 °C, the oil yield and oil quality are the best. If the reaction temperature of the catalytic cracking is too high, the oil yield will decrease and the gas yield will increase, and coking will easily occur. At present, the pyrolysis reactor is usually heated by molten salt. Using such reactors, some substances in the materials in the later stage of the reaction are not easy to volatilize, and the ashes are not easy to dry and cannot be discharged from the reactor quickly, which occupies the internal space of the reactor, resulting in the decline of waste plastic feeding efficiency, which in turn leads to the long processing time of waste plastics, and difficulty to expand the processing capacity.

In addition, the temperature of the ashes obtained after the catalytic cracking reaction of waste plastics is generally between 400 to 600 °C. The current reactor adopts continuous high-temperature ash discharging, and the ashes will burn when being in contact with air at this temperature, and natural cooling wastes heat energy, which is not conducive to heat energy recovery and storage.

Finally, the ashes are cooled and conveyed by the tubular auger or the pipe chain conveyor. The tubular auger is prone to clogging when transporting powdery materials over long distances. The pipe chain conveyor has the shortcomings of complex structure, large no-load energy consumption, high manufacturing cost, poor cooling effect and is not conducive to heat energy recovery, and is also easy to cause blockage.

For this reason, there is a constant need to develop an ash discharging system and method in this field.

### SUMMARY OF THE INVENTION

In order to overcome at least one defect in the prior art, the object of the application is first to provide an ash discharging system that can quickly dry and cool the ashes and recover the heat energy released when the ashes are cooled. Specifically, the ash discharging system described herein comprises an ash-drying device and an ash cooling and conveying device that are connected sequentially. The ash-drying device can dry wet ashes from an upstream reactor at a working temperature of 500 to 700 °C. In addition, the ash cooling and conveying device described herein comprises a cooling auger which comprises a continuous blade auger section and a segmented blade auger section connected together. The auger thrust force of the segmented blade auger section is small, which allows the ashes to be regurgitated and stirred in this section, so that the sufficient cooling of the ashes can be guaranteed, and blockage of ashes can be prevented from occurring again.

The purpose of the present application is also to provide an ash discharging method that utilizes the ash discharging system described above.

In order to solve the above technical problem, the present application provides the following technical solutions.

In a first aspect of the present disclosure, an ash cooling and conveying device is provided, wherein the ash cooling and conveying device comprises a second ash inlet, a cooling auger, a U-shaped cooling tank and a second ash outlet. The second ash inlet and the second ash outlet are respectively connected with the U-shaped cooling tank. The cooling auger is disposed in the U-shaped cooling tank, and comprises a continuous blade auger section and a segmented blade auger section which are connected together.

In an embodiment of the first aspect, a length of the segmented blade auger segment is at least 50%, preferably 50% to 70% of a length of the cooling auger.

In a second aspect of the present disclosure, an ash discharging system is provided, wherein the ash discharging system comprises:
an ash-drying device, which is used to dry wet ashes from an upstream reactor to obtain dried ashes;
an ash cooling and conveying device, which is used to cool dried ashes to obtain cooled and dried ashes;
wherein the ash-drying device comprises a housing, a heating assembly and a stirring assembly, wherein the housing is provided with a first ash inlet for receiving wet ashes, a first ash outlet and a gas outlet, the working temperature of the heating assembly is between 500 to 700 °C. The stirring assembly comprises a stirring power system, a stirring shaft connected with the stirring power system and a helical ribbon stirring paddle disposed on the stirring shaft.

In an embodiment of the second aspect, the ash-drying device further comprises an ash discharging auger assembly, and at least part of the ash discharging auger assembly is disposed in one side of the housing close to the first ash outlet.

In an embodiment of the first aspect, the helical pitch of the helical ribbon stirring paddle is between 60% and 100% of an inner diameter of the housing, and the width of the helical ribbon stirring paddle is between 8% and 15% of the inner diameter of the housing.

In an embodiment of the second aspect, the ash-drying device for the reactor further comprises an oil gas recovery device, and the gas outlet is connected with the oil gas recovery device.

In an embodiment of the second aspect, the ash cooling and conveying device comprises a second ash inlet, a cooling auger, a U-shaped cooling tank and a second ash outlet. The second ash inlet and the second ash outlet are respectively connected with the U-shaped cooling tank. The cooling auger is disposed in the U-shaped cooling tank, and comprises a continuous blade auger section and a segmented blade auger section which are connected together.

In an embodiment of the second aspect, a length of the segmented blade auger segment is at least 50%, preferably 50% to 70% of a length of the cooling auger.

In an embodiment of the second aspect, a single loop blade length of the segmented blade auger segment is 30% to 70% of that of the continuous blade auger segment.

In an embodiment of the second aspect, the ash cooling and conveying device further comprises a heat exchange assembly, which comprises a heat exchange medium inlet, a heat exchange pipeline and a heat exchange medium outlet that are connected sequentially, and the heat exchange pipeline is in contact with the U-shaped cooling tank and/or a main shaft of the cooling auger.

In an embodiment of the second aspect, the ash cooling and conveying device further comprises a heat energy recovery device, and the heat exchange medium outlet is connected with the heat energy recovery device.

In an embodiment of the second aspect, the ash discharging system further comprises an ash-collecting device for collecting the cooled and dried ashes from the ash cooling and conveying device.

In a third aspect of the present disclosure, an ash discharging method is provided, wherein the ash discharging method comprises the ash discharging system described above.

Compared with the prior art, the positive effects of the present disclosure are in that: the ash discharging system described herein comprises an ash-drying device and an ash cooling and conveying device, wherein the ash-drying device is used for drying the wet ashes from the upstream reactor into dried ashes, and the ash cooling and conveying device is used for cooling the dried ashes, and conveying the cooled drying ashes to the ash-collecting device. The ash-drying device described herein is separated from the reactor, therefore the working temperature can be adjusted to between 500 and 700 °C independently, which is higher than the reaction temperature between 400 and 450 °C in the reactor, so that it can dry the wet ashes more quickly, shorten the time spent on waste plastic pyrolysis to produce oil, and improve the processing capacity of the waste plastic pyrolysis system.

In addition, the ash cooling and conveying device described herein comprises a cooling auger which comprises a continuous blade auger section and a segmented blade auger section connected together. The auger thrust force of the segmented blade auger section is small, which allows the ashes to be refluxed and stirred in this section, so that the sufficient cooling of the ashes can be guaranteed, and blockage of ashes can be prevented from occurring again.

### BRIEF DESCRIPTION OF DRAWINGS

The present application can be better understood by describing the embodiment of the present application in conjunction with the accompanying drawings, in which the present application is described:
FIG. 1 is a structure diagram of an ash-drying device and reactor in one embodiment of the present application;
FIG. 2 is a structure diagram of the ash-drying device in the embodiment of FIG. 1;
FIG. 3 is a side view of the ash-drying device in the embodiment of FIG. 2;
FIG. 4 is a structure diagram of an ash cooling and conveying device in one embodiment of the present application;
FIG. 5 is a side view of the ash cooling and conveying device in the embodiment of FIG. 4;
FIG. 6 is a structure diagram of an ash discharging system in one embodiment of the present application.

### REFFERENCE NUMERALS:

100. Reactor; 200. Ash-drying device; 210. Housing; 212. First ash inlet; 214. First ash outlet; 216. Gas outlet; 220. Heating assembly; 222. Temperature measuring element; 230. Stirring assembly; 232. Stirring power system; 234. Stirring shaft; 236. Helical ribbon stirring paddle; 240. Ash discharging auger assembly; 242. Ash discharging power system; 244. Ash discharging auger; 246. Ash discharging valve; 300. Ash cooling and conveying device; 310. Second ash inlet; 312. trapezoidal bucket; 320. Cooling auger; 322. Continuous blade auger section; 324. Segmented blade auger section; 330. U-shaped cooling tank; 332. U-shaped tank cover plate; 340. Second ash outlet; 350. Bearing seal assembly; 360. Supporting assembly; 370. Power assembly; 380. Heat exchange assembly; 382. Heat exchange medium inlet; 384. Heat exchange pipeline; 386. Heat exchange medium outlet; 400. Ash-collecting device; 500. Heat energy recovery device.

### DESCRIPTION OF EMBODIMENTS

Unless otherwise defined, the technical or scientific terms used in this description and claims shall have the ordinary meaning understood by persons of general skill in the technical field to which the invention belongs.

In the description of this disclosure, it should be understood that the orientations or positional relationships indicated by the terms "center", "longitudinal", "transverse", "up", "down", "front", "back", "left", "right", "vertical", "horizontal", "top", "bottom", "inner", "outer", etc., are orientations or positional relationships indicated based on the drawings and are only for the convenience of describing the present disclosure and simplifying the description, and does not indicate or imply that the devices or elements referred to must have specific orientations, be constructed and operated in particular orientations, and therefore cannot be construed as a limitation on the present disclosure.

In addition, the terms "first", "second", etc., are only used for the purpose of description and should not be construed as indicating or implying relative importance or implying the number of technical features indicated. Thus, features defined by "first", "second", etc., may explicitly or implicitly include one or more of these features. In the description of this disclosure, unless otherwise explained, "plurality" means two or more than two, unless otherwise expressly and specifically qualified.

In the description of the present invention, it should be noted that, unless otherwise expressly specified or limited, the terms "mount", "couple" and "connect" shall be understood broadly. For example, they may be coupled, detachably connected, or integrally connected. For a person of ordinary skill in the art, the specific meaning of the above terms in the present disclosure can be understood by the specific circumstances.

As mentioned above, in the existing catalytic cracking production process of waste plastics, plastic oil and ashes are obtained by making waste plastics undergo catalytic cracking reaction in a pyrolysis reactor. However, some substances in the materials in the later stage of the reaction are not easy to volatilize, and the ashes are not easy to dry and cannot be discharged from the reactor quickly, which occupies the internal space of the reactor, resulting in the decline of waste plastic feeding efficiency, which in turn leads to the long processing time of waste plastics, and the processing capacity is difficult to expand. In addition, currently, ashes are cooled and conveyed by a tubular auger or a pipe chain conveyor, which is easy to clog and cannot effectively recover the heat energy released when the ashes are cooled.

To this end, in the first aspect, the application provides an ash discharging system that can quickly dry and cool the ashes and recover the heat energy released when the ashes are cooled. The ash discharging system described herein comprises an ash-drying device and an ash cooling and conveying device that are connected sequentially. The ash-drying device can be used to dry the wet ashes from the upstream reactor, while the ash cooling and conveying device is used to cool the dried ashes and transport them to the ash-collecting device. In a preferred embodiment, the ash discharging system described herein may further comprise a heat energy recovery device for recovering the heat energy released when the ashes are cooled in the ash cooling and conveying device.

In the second aspect of the present disclosure, an ash discharging method is provided, which uses the ash discharging system described above. In an specific embodiment, the ash discharging method comprises the following steps: S1: drying the wet ashes from the upstream reactor in the ash-drying device under a drying temperature of 500 to 700 °C to obtain the dried ashes; S2: conveying the dried ashes obtained in step S1 to the ash cooling and conveying device, and cooling the dried ashes to a required temperature and the conveying the cooled and dried ashes to the ash-collecting device. In a specific embodiment, the step S2 further comprises recovering heat energies released when cooling the dried ashes.

The technical solution of the present application will be clearly and completely described below in conjunction with the accompanying drawings and embodiments of the present application.

### Embodiment 1

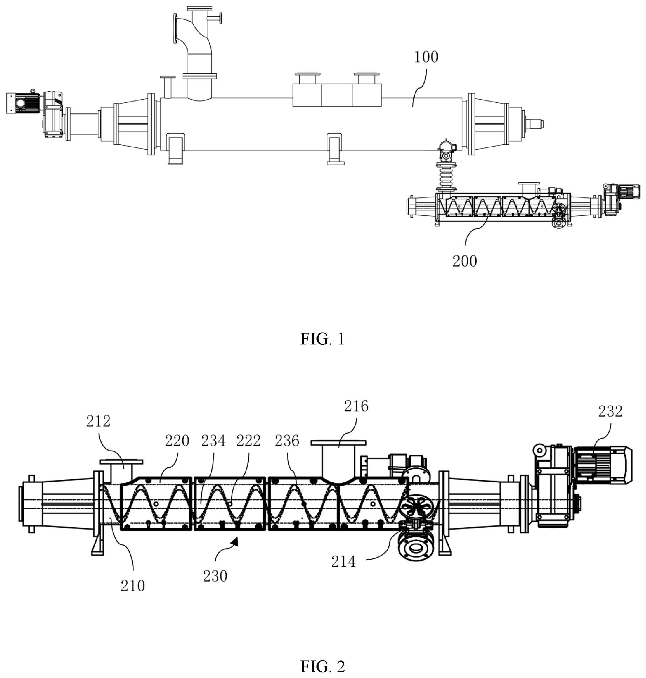

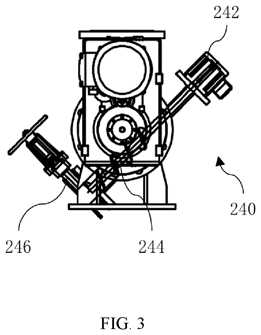

The embodiment relates to an ash-drying device 200 as shown in FIG. 1 to FIG. 3, which can communicate with the upstream reactor 100 and is used for receiving the wet ashes from the reactor 100.

The ash-drying device 200 may include a housing 210, a heating assembly 220 and a stirring assembly 230. The heating assembly 220 is disposed on the outer side of the housing 210. At least part of the stirring assembly 230 is disposed in the housing 210. The housing 210 is provided with a first ash inlet 212, a first ash outlet 214 and a gas outlet 216, and the first ash inlet 212 is connected with the ash outlet of the reactor 100. The stirring assembly 230 comprises a stirring power system 232, a stirring shaft 234 connected with the stirring power system 232 and a helical ribbon stirring paddle 236 disposed on the stirring shaft 234. The heating assembly 220 can be a cast iron electric heating assembly. Cast iron electric heating assembly is characterized by high temperature resistance, fast heating rate and long service life. The ash-drying device 200 uses the cast iron electric heating assembly as a heat source, and the working temperature can reach between 500 and 700 °C.

The ash-drying device 200 can be used in conjunction with the upper stage reactor 100. That is, the wet ashes that needs high temperature to dry in the later stage of pyrolysis of the reactor 100 are discharged into the ash-drying device 200 for separate high-temperature drying, and the upper stage reactor 100 that is emptied can be fed new materials again, so as to improve the work efficiency of the reactor 100. Moreover, because the volume of the materials in the later stage of the reaction is small, the volume of the ash-drying device 200 can also be reduced accordingly. Such ash-drying device 200 has the advantages of easy heating, fast drying speed and more energy saving and environmentally friendly. The volume of ash-drying device 200 as shown in FIG. 1 to FIG. 3 is only less than 1/3 of the reactor 100.

In some embodiments, the heating assembly 220 is provided with a temperature measuring element 222 and a temperature control system, and the temperature measuring element 222 is connected with the temperature control system. The temperature measuring element 222 can be disposed on the inner wall of the housing 210. By providing the temperature measuring element 222 and the temperature control system, the heating temperature of the heating assembly 220 can be more accurately controlled.

In some embodiments, the ash-drying device 200 further comprises an ash discharging auger assembly 240. The ash discharging auger assembly 240 helps to discharge the dried materials out of the ash-drying device 200. At least part of the ash discharging auger assembly 240 is disposed in one side of the housing 210 close to the first ash outlet 214. In some specific embodiments, the ash discharging auger assembly 240 may comprise an ash discharging power system 242 and an ash discharging auger 244 connected with the ash discharging power system 242. The ash discharging auger 244 is disposed in the housing 210, and one end of the ash discharging auger 244, which is far away from the ash discharging power system 242, is disposed at a place close to the first ash outlet 214.

In some embodiments, the ash-drying device 200 further comprises an ash discharging valve 246 disposed at the first ash outlet 214. The ash discharging valve 246 can be used to control the discharge of materials. In some embodiments, a check valve is disposed on the gas outlet 216. The check valve can be used to control the flow direction of oil gas and other volatile gases dried out by the ash-drying device 200. In some embodiments, the ash-drying device 200 for the reactor 100 further comprises an oil gas recovery device, and the gas outlet is connected with the oil gas recovery device.

In some embodiments, the ash-drying device 200 for the reactor 100 further comprises a humidity detection element which is disposed on the inner wall of the housing 210. The humidity detection element can be connected with the ash discharging valve 246 and/or the cast iron heating assembly 220. The humidity detection element can help to control the drying process.

Below, the working method of the ash-drying device 200 for the reactor 100 is briefly described in conjunction with the embodiments shown in FIG. 1 to FIG. 3.

First, the wet ashes from the upstream reactor 100 enter the ash-drying device 200 through the first ash inlet 212 disposed at the housing 210. At this moment, the stirring power system 232 drives the helical ribbon stirring paddle 236 to rotate through the stirring shaft 234, and the materials are driven by the helical ribbon stirring paddle 236, so that the stirring of the materials and the pushing of the ash discharging are realized. At the same time, the heating assembly 220 heats the housing 210, so that the materials heat up, and the oil gas and other volatile gases in the materials are heated and volatilized, and discharged out of the ash-drying device 200 through the gas outlet 216 on the housing 210, so that the drying of the materials is realized. The dried materials are pushed to the vicinity of the first ash outlet 214 by the helical ribbon stirring paddle 236, and the ash discharging auger assembly 240 assists in discharging the dried materials out of the ash-drying device 200 from the first ash outlet 214 so as to enter the downstream ash cooling and conveying device 300.

In a specific embodiment, the helical pitch of the helical ribbon stirring paddle 236 is between 60% and 100% of the inner diameter of the housing 210 of the ash-drying device. If the helical pitch is too small, the ash discharging speed will be slow, and if the helical pitch is too large, the propulsion speed will be too fast and it is not conducive to stirring. The width of the helical ribbon stirring paddle 236 is between 8% and 15% of the inner diameter of the housing of the ash-drying device. If the width is too small, the thrust will be too small and it is not conducive to the stirring and the ash discharging. If the width is too large, the thrust will be too large and it is not conducive to the regurgitation of ashes, resulting in the accumulation of the ashes at one end, and rendering the equipment inoperable.

When the helical ribbon stirring paddle 236 is stirring, the helical ribbon stirring paddle 236 is always scraping the inner wall of the ash-drying device like a scraper, preventing the ashes from coking on the inner wall of the ash-drying device, and the ashes on the inner wall of the ash-drying device are turned over to the inside of the ash-drying device at the same time, which is conducive to the interface renewal of the ashes. Because the helical ribbon stirring paddle 236 has a certain thrust, the ashes can be pushed to the ash outlet during ash discharging. When the ashes are not discharged, because the helical ribbon stirring paddle 236 is narrower and the thrust is small, most of the ashes regurgitate, hence the accumulation will occur, and it will always be kept in the stirring state. The helical ribbon stirring paddle 236 not only realizes the stirring of ashes but also realizes the pushing of ashes during discharging.

### Embodiment 2

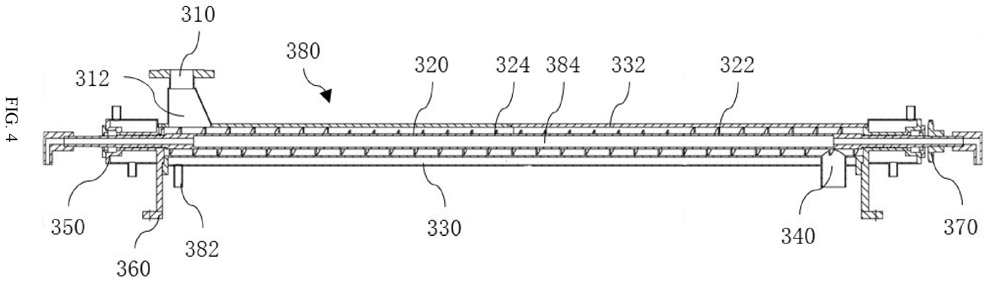

The present embodiment relates to an ash cooling and conveying device 300 as shown in FIG. 4 to FIG. 6.

The ash cooling and conveying device comprises a second ash inlet 310, a cooling auger 320, a U-shaped cooling tank 330 and a second ash outlet 340. The second ash inlet 310 and the second ash outlet 340 are respectively connected with the U-shaped cooling tank 330, and the cooling auger 320 is disposed in the U-shaped cooling tank 330. In some embodiments, the second ash inlet 310 is provided with a trapezoidal bucket 312 that is narrow at the top and wide at the bottom.

In the embodiments shown in FIG. 1 and FIG. 2, the ash cooling and conveying device may also comprise a bearing seal assembly 150 disposed at two ends of the cooling auger 320, and the exterior of the bearing seal assembly 150 is wrapped by a cooling water jacket. The bearing seal assembly 150 can play the role of carrying and sealing lubricating oil, and the cooling water jacket wrapped externally can cool the bearing seal assembly 150. The ash cooling and conveying device may also comprise a supporting assembly 160 which can arbitrarily mount the ash cooling conveying device on the ground or on a platform. The ash cooling conveying device may also comprise a power assembly 370 connected with the cooling auger 320, and the power assembly 370 comprises a geared motor and a power gear connecting the geared motor with the cooling auger 320. The ash cooling and conveying device can also comprise a U-shaped tank cover plate 332 which can be sealed on the U-shaped cooling tank 330 to prevent high-temperature dust and high-temperature gas leakage.

The ash cooling and conveying device further comprises a heat exchange assembly 380 which comprises a heat exchange medium inlet 382, a heat exchange pipeline 384 and a heat exchange medium outlet 386 that are connected sequentially, and the heat exchange pipeline 384 is in contact with the U-shaped cooling tank 330 and/or a main shaft of the cooling auger 320. The heat exchange assembly 380 can use cooling water as the cooling medium.

In some embodiments, the main shaft of the cooling auger 320 is a hollow shaft, and the heat exchange pipeline 384 is the hollow part of the hollow shaft. The heat exchange line 384 can also be the internal space of the water jacket of the U-shaped cooling tank. In some embodiments, the ash cooling and conveying device further comprises a heat energy recovery device 500, and the heat exchange medium outlet 386 is connected with the heat energy recovery device 500.

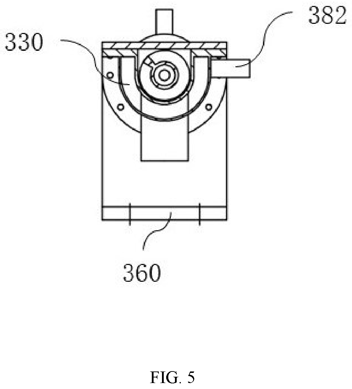

In the embodiments shown in FIG. 4 and FIG. 5, the heat exchange assembly 380 comprises two cooling paths. The first path is the water jacket path of U-shaped cooling tank. The cooling water flows into the water jacket of the U-shaped cooling tank through the heat exchange medium inlet 382 for heat exchange, and flows to the heat energy recovery device from the heat exchange medium outlet 386 after absorbing the heat energy of ashes in the water jacket of the U-shaped cooling tank. The second path is a cooling auger 320 path. The cooling water flows into the hollow part of the main shaft of cooling auger 320 through the heat exchange medium inlet 382, and performs heat exchange with the ashes through the surfaces of the blades and main shaft of the coiling auger 320, then flows to the heat recovery device 500 from a rotary joint at the other end after absorbing heat energy. By adopting this design, the ash cooling and conveying device can effectively realize the cooling and heat energy recovery of the ashes.

In some embodiments, the cooling auger 320 comprises a continuous blade auger segment 322 and a segmented blade auger segment 324 which are connected together. The continuous blade auger section 322 can be disposed at a position close to the second ash outlet 340. In some embodiments, the length of the segmented blade auger segment 324 is at least 50%, preferably 50% to 70% of the length of the cooling auger 320. In some embodiments, the single loop blade length of the segmented blade auger segment 324 is 30% to 70% of that of the continuous blade auger segment 322. The auger blades of the segmented blade auger section 324 are not continuous, therefore, the auger thrust force is relatively small. By adopting the segmented blade auger section 324, the ashes can be regurgitated and stirred in this section, and then can be fully cooled.

In the embodiments shown in FIG. 4 and FIG. 5, the length of the segmented blade auger segment 324 is 50% of the length of the cooling auger 320, and the single loop blade length of the segmented blade auger segment 324 is 50% of the single loop blade length of the continuous blade auger segment 322.

The thrust force of the segmented blade auger section 324 is small, realizing the regurgitation and stirring of ashes, but its conveying capacity is reduced. A continuous blade auger section 322 of 15% to 25% is disposed at the ash inlet end, and its main task is to push all the incoming ashes to the middle section to carry out stirring and cooling. A continuous blade auger section 322 of 15% to 25% is also disposed at the ash outlet end, and its main task is to quickly push the ashes cooled by the segmented blade auger section 324 to the ash outlet. If the segmented blade auger section 324 is too long, although the cooling effect is good, but the thrust force is reduced, and it is easy to produce congestion. If the segmented blade auger section 324 is too short, then the ashes have a short residence time in the device, and the cooling effect is poor, hence the appropriate proportion of the segmented stirring paddle is particularly important.

In the embodiments shown in FIG. 4 and FIG. 5, the high-temperature ashes from the ash-drying device 200 enter the ash cooling conveying device through the second ash inlet 310. The second ash inlet 310 is provided with a trapezoidal bucket 312 that is narrow at the top and wide at the bottom. Due to the shape characteristics of trapezoidal bucket 312 that is narrow at the top and wide at the bottom, the ashes are not easy to produce the bridging phenomenon in the trapezoidal bucket 312. Subsequently, the ashes are conveyed by means of a cooling auger 320. When the ashes pass through the segmented blade auger section 324, because the auger blade of the segmented blade auger section 324 is not continuous, and the auger thrust force is relatively small, so that the ashes are regurgitated and stirred in this section, and then the ashes are fully cooled. The fully cooled ashes are rapidly pushed to the second ash outlet 340 through the continuous blade auger section 322 disposed close to the position of the second ash outlet 340, and are discharged out of the ash cooling and conveying device 300 into the ash-collecting device 400.

### Embodiment 3

This embodiment relates to an ash discharging system as shown in FIG. 6.

In the embodiment as shown in FIG. 6, the ash discharging system comprises an ash-drying device 200 and an ash cooling and conveying device 300. The ash-drying device 200 is used to dry wet ashes from an upstream reactor 100 to obtain dried ashes. The ash cooling and conveying device 300 is used for cooling the dried ashes from the ash-drying device 200, obtaining the cooled and dried ashes, and conveying the cooled and dried ashes to the ash-collecting device 400. In a preferred embodiment, the ash discharging system may further comprise a heat energy recovery device 50 for recovering the heat energy released when the dried ashes with a high temperature are cooled in the ash cooling and conveying device 300.

The characteristics of the ash-drying device 200 and the ash cooling conveying device 300 are respectively described as the above Embodiment 1 and Embodiment 2, and are not repeated herein.

### Embodiment 4

This embodiment relates to an ash discharging method.

In a specific embodiment, the ash discharging method uses an ash discharging system as described in Embodiment 3. The ash discharging method may comprise the following steps: S1: drying the wet ashes from the upstream reactor 100 in the ash-drying device 200 under a drying temperature of 500 to 700 °C to obtain the dried ashes; S2: conveying the dried ashes obtained in step S1 to the ash cooling and conveying device 300, and cooling the dried ashes to a required temperature and the conveying the cooled and dried ashes to the ash-collecting device 400. In a preferred embodiment, the step S2 further comprises recovering heat energies released when cooling the dried ashes using the heat energy recovery device 500.

The beneficial effects of the ahs-ash discharging system and the ash discharging method described herein are that an independent ash-drying device 200 is used to dry the wet ashes obtained in the upstream reactor 100, the drying time of the wet ashes are significantly shortened, and the production capacity of the whole waste plastic recycling system is increased. In addition, the ash cooling conveying device 300 of the segmented cooling auger with anti-clogging effect is used to cool and convey the dried ashes with a high temperature from the ash drying unit 200, which realizes continuous ash discharging and increases the safety of the entire waste plastic recycling system.

The above description of the embodiment is intended to facilitate the understanding and application of the present application by a person of ordinary skill in the art. It is obvious that a person familiar with the art can easily make various modifications to these embodiments and apply the general principles described here to other embodiments without creative effort. Therefore, the present application is not limited to the embodiments herein, and the improvements and modifications made by those skilled in the art in accordance with the contents disclosed in the present application without departing from the scope and spirit of the present application are within the scope of the present application.

## Claims

1. An ash cooling and conveying device, wherein the ash cooling and conveying device comprises a second ash inlet, a cooling auger, a U-shaped cooling tank and a second ash outlet, wherein the second ash inlet and the second ash outlet are respectively connected with the U-shaped cooling tank, and wherein the cooling auger is disposed in the U-shaped cooling tank, and comprises a continuous blade auger section and a segmented blade auger section which are connected together.

2. The ash cooling and conveying device of claim 1, wherein the length of the segmented blade auger segment is at least 50%, preferably 50% to 70% of the length of the cooling auger.

3. An ash discharging system, wherein the ash discharging system comprises:
an ash-drying device, which is used to dry wet ashes from an upstream reactor to obtain dried ashes;
an ash cooling and conveying device, which is used to cool dried ashes to obtain cooled and dried ashes;
wherein the ash-drying device comprises a housing, a heating assembly and a stirring assembly, wherein the housing is provided with a first ash inlet for receiving wet ashes, a first ash outlet and a gas outlet, the working temperature of the heating assembly is between 500 to 700 °C, and the stirring assembly comprises a stirring power system, a stirring shaft connected with the stirring power system and a helical ribbon stirring paddle disposed on the stirring shaft.

4. The ash discharging system of claim 3, wherein the ash-drying device further comprises an ash discharging auger assembly, and at least part of the ash discharging auger assembly is disposed in one side of the housing close to the first ash outlet.

5. The ash discharging system of claim 3, wherein the helical pitch of the helical ribbon stirring paddle is between 60% and 100% of an inner diameter of the housing, and the width of the helical ribbon stirring paddle is between 8% and 15% of the inner diameter of the housing.

6. The ash discharging system of any one of claims 3 to 5, wherein the ash cooling and conveying device comprises a second ash inlet, a cooling auger, a U-shaped cooling tank and a second ash outlet, wherein the second ash inlet and the second ash outlet are respectively connected with the U-shaped cooling tank, and wherein the cooling auger is disposed in the U-shaped cooling tank, and comprises a continuous blade auger section and a segmented blade auger section which are connected together.

7. The ash discharging system of claim 4, wherein a length of the segmented blade dragon segment is at least 50%, preferably 50% to 70% of a length of the cooling auger.

8. The ash discharging system of claim 5, wherein a single loop blade length of the segmented blade auger segment is 30% to 70% of that of the continuous blade auger segment.

9. The ash discharging system of claim 5, wherein the ash cooling and conveying device further comprises a heat exchange assembly, wherein the heat exchange assembly comprises a heat exchange medium inlet, a heat exchange pipeline and a heat exchange medium outlet that are connected sequentially, and wherein the heat exchange pipeline is in contact with the U-shaped cooling tank and/or a main shaft of the cooling auger.

10. The ash discharging system of claim 7, wherein the ash cooling and conveying device further comprises a heat energy recovery device, and the heat exchange medium outlet is connected with the heat energy recovery device.

11. The ash discharging system of claim 4, wherein the ash discharging system further comprises an ash-collecting device for collecting the cooled and dried ashes from the ash cooling and conveying device.

12. An ash discharging method, wherein the ash discharging method uses the ash discharging system of any one of claims 3 to 11, the method comprises:
S1: drying the wet ashes from the upstream reactor in the ash-drying device under a drying temperature of 500 to 700 °C to obtain the dried ashes;
S2: conveying the dried ashes obtained in step S1 to the ash cooling and conveying device, and cooling the dried ashes to a required temperature and the conveying the cooled and dried ashes to the ash-collecting device;
preferably, the step S2 further comprises recovering heat energies released when cooling the dried ashes.
